# EUROPEAN PATENT SPECIFICATION

(11) **EP 2 772 139 B1**
(45) Date of publication and mention of the grant of the patent: **09.06.2021**
(21) Application number: 13156873.5
(22) Date of filing: 27.02.2013
(51) Int. Cl.: A22C 13/00

(54) **Cellulose-based food casing and method of manufacture**
Lebensmittelgehäuse auf Zellulosebasis und Herstellungsverfahren
Enveloppe alimentaire à base de cellulose et procédé de fabrication

(43) Date of publication of application: 03.09.2014
(73) Proprietor: ViskoTeepak Belgium NV, 3920 Lommel (BE)
(72) Inventor: Hihnala, Esa, 08150 Lohja (FI); Fröman, Pontus, 10940 Hanko (FI)
(74) Representative: Papula Oy

(56) References cited:
- GB-A- 1 287 286
- GB-A- 2 148 910
- US-A- 5 104 486
- US-A1- 2007 102 130
- US-A1- 2012 052 223
- US-B2- 6 667 082

## Description

### FIELD OF THE INVENTION

This document relates to a food casing, more particularly a cellulose-based food casing, comprising agents improving their properties. This document also relates to a method of production of said food casing.

### BACKGROUND OF THE INVENTION

Food casings based on cellulose have been used for decades for the production of e.g. raw sausages, dry sausages and semi-dry sausages.

For instance, GB 1287286 discloses a food casing in which a long fiber saturating tissue formed of long hemp fibers may be bonded together with a wet strength sizing agent, such as regenerated cellulose.

In the manufacture of processed sausage products, a meat emulsion is prepared from comminuted meat together with fillers, seasonings etc. A tubular food casing, such as one containing non-edible cellulose, may be loaded onto the stuffing horn of a filling machine and stuffed with meat emulsion. Depending on the type of sausage product, the casing may be twisted, tied or clipped into suitable size, or formed into chubs or sticks, and further processed.

Dry or semi-dry sausages, occasionally referred to as cervelats or summer sausages, are larger sausage products and include such representative examples as air dried pepperoni, soft salami, hard salami and dry salami, and the like. This type of sausage has reduced moisture content, and its preparation usually includes drying as one step of its manufacture. A dry sausage may also be smoked. Cooking may also be performed in some instances in the smoking step. Some sausages may be fermented during their processing.

There are significant variations in the compositions of the meat emulsions used affecting the processing and the final product. Further, the size of the sausage product and consequently the size, e.g. diameter, of the food casing may vary greatly. There are also variations in the ripening and respective drying cycles to reach a final protein to fat ratio and/or moisture to protein ratio. Ripening and drying is characterized by weight loss ranging from approx. 10 to 30%, which is associated with a reduction in volume and mainly radial shrinkage.

Due to the above reasons, it may be challenging to optimize the production of dry or semi-dry and other sausage products. It is essential that the drying and/or ripening rate is optimal. The food casing should adhere sufficiently to the sausage or meat emulsion to avoid grease or oil spot formation between the sausage or meat emulsion and the food casing. The adverse phenomenon where grease or oil spots are formed between the sausage or meat emulsion and the food casing is often called greasing out. In addition to being unsightly, greasing out also reduces the rate of ripening and/or drying. Greasing out may also have adverse effects at peeling, because the grease or oil may increase adherence of the meat emulsion to the food casing.

Furthermore, the food casing should adhere to an extent that allows peeling off the casing using different peeling procedures, including e.g. manual or fast speed automatic peeling. Automatic peeling apparatuses and methods have been developed for large scale production of sausage products. For instance, known are apparatuses having mechanisms for inflating the casing with pressurized air, for removing the end caps of the casing, for slitting and removing the casing from the sausage product, and for positioning the sausage products for these operations. Efficient and fast processing of sausage products, e.g. pork and pepperoni sausages, requires the use of higher production temperatures, which may result in significant greasing out. Naturally, productivity in the production of sausage products should be maintained at an acceptable level for economical reasons.

Several methods and chemical agents have been proposed for improving, i.e. increasing or reducing, adhesion of a food casing to proteins, meat emulsions or or sausage products, and for allowing suitable release and peeling of the food casing.

However, these approaches may have various limitations and drawbacks. For instance, fluctuation due to variation in the amount of fibre on the inside surface of a cellulose-based food casing depending on the degree of viscose penetration may result to overly high adhesion, particularly for sausage types requiring the combination of high weight loss during ripening and drying and fast or automatic peeling.

The use of chemical agents for instance internal impregnation or coating of a food casing with an adhesion promoting agent and/or a release agent may be difficult to optimize. For instance, the agents may be incompatible (e.g. in terms of hydrophilicity) and thus require additional components as emulsifiers; the agents may be costly or not well suitable for use in food applications; or it may be difficult to find a suitable balance between the agents and the desired characteristics of the food casing. Furthermore, the agents may be susceptible to varying conditions due to chemical or mechanical steps during the manufacture of the food casing, or there may be fluctuations in the amount of the agents in the food casing, leading to inconsistencies in the food casings or manufactured batches thereof and their performance during the manufacture of the sausage product.

### PURPOSE OF THE INVENTION

The purpose of the invention is to provide a food casing, in particular a cellulose-based food casing.

### SUMMARY

The invention relates to a cellulose-based food casing comprising alkenyl succinic anhydride according to claim 1 and a method for the manufacture of a cellulose-based food casing comprising alkenyl succinic anhydride according to claim 8.

The cellulose-based food casing is tubular.

The cellulose-based food casing comprises regenerated cellulose.

The cellulose-based food casing comprises a fibrous reinforcement.

In one embodiment, the cellulose-based food casing comprises a fibrous reinforcement comprising an inside surface and an outside surface; and an outside layer on the outside surface of the fibrous reinforcement and/or an inside layer on the outside surface of the fibrous reinforcement; and the outside layer and/or the inside layer comprises regenerated cellulose.

In one embodiment, the cellulose-based food casing is a single layer viscose casing or a double layer viscose casing.

In one embodiment, the cellulose-based food casing comprises an inside layer including alkenyl succinic anhydride.

The cellulose-based food casing comprises an inside surface and an outside surface; and the inside surface of the cellulose-based food casing is coated with alkenyl succinic anhydride, or

alkenyl succinic anhydride is impregnated in the inside layer and/or the outside layer of the cellulose-based food casing.

In one embodiment, alkenyl succinic anhydride is C8, C9, C10, C11, C12, C13, C14, C15, C16, C17, C18, C19, C20, C21, C22, C23, or C24-alkenyl succinic anhydride, or any mixture thereof.

In one embodiment, the amount of alkenyl succinic anhydride in the cellulose-based food casing is up to about 1 % by weight based on the total dry weight of regenerated cellulose contained in the cellulose-based food casing.

In one embodiment, the cellulose-based food casing further comprises a stabilizing agent.

In one embodiment, the cellulose-based food casing further comprises a stabilizing agent such as starch, pectin, silica, one or more polyacrylamides, bentonite, one or more carboxymethyl celluloses, polyvinyl amine, polyvinyl alcohol, poly diallyl dimethyl ammonium chloride, galactoglucomannan, or polyamidoamine-epichlorohydrin.

In one embodiment, the stabilizing agent is selected from the group consisting of starch, pectin, silica, one or more polyacrylamides, bentonite, one or more carboxymethyl celluloses, polyvinyl amine, polyvinyl alcohol, poly diallyl dimethyl ammonium chloride, galactoglucomannan, and polyamidoamine-epichlorohydrin.

In one embodiment, the cellulose-based food casing further comprises a peeling agent.

The invention also relates to a method for the manufacture of the cellulose-based food casing according to the invention, which method comprises the step of
impregnating or coating a cellulose-based food casing with a solution comprising alkenyl succinic anhydride.

In one embodiment, a cellulose-based food casing is coated with a solution comprising alkenyl succinic anhydride.

The method comprises the steps of
a) preparing a cellulose-based food casing by impregnating the inside surface and/or outside surface of a fibrous reinforcement with regenerated cellulose;
b) coagulating and washing the cellulose-based food casing obtainable from step a); and
c) coating the inside surface of the cellulose-based food casing obtainable from step b) with a solution comprising alkenyl succinic anhydride.
   In one embodiment, the method further comprises the step of
d) drying and/or curing the cellulose-based food casing.

In one embodiment, step c) comprises coating the inside surface of the cellulose-based food casing with the solution comprising alkenyl succinic anhydride by internal bubble coating.

In one embodiment, the concentration of alkenyl succinic anhydride in the solution comprising alkenyl succinic anhydride is in the range of about 1 to about 15 g/l.

In one embodiment, the concentration of alkenyl succinic anhydride in the solution comprising alkenyl succinic anhydride is in the range of about 1 to about 4 g/l.

In one embodiment, the concentration of alkenyl succinic anhydride in the solution comprising alkenyl succinic anhydride is in the range of about 4 to about 12 g/l.

In one embodiment, the solution comprising alkenyl succinic anhydride further comprises a stabilizing agent.

In one embodiment, the solution comprising alkenyl succinic anhydride further comprises a stabilizing agent such as starch, pectin, silica, one or more polyacrylamides, bentonite, one or more carboxymethyl celluloses, polyvinyl amine, polyvinyl alcohol, poly diallyl dimethyl ammonium chloride, galactoglucomannan, or polyamidoamine-epichlorohydrin.

In one embodiment, the solution comprising alkenyl succinic anhydride further comprises a stabilizing agent selected from the group consisting of starch, pectin, silica, one or more polyacrylamides, bentonite, one or more carboxymethyl celluloses, polyvinyl amine, polyvinyl alcohol, poly diallyl dimethyl ammonium chloride, galactoglucomannan, and polyamidoamine-epichlorohydrin.

In one embodiment, the stabilizing agent is starch.

In one embodiment, the stabilizing agent is cationic starch.

In one embodiment, the concentration of starch in the solution comprising alkenyl succinic anhydride is in the range of about 0.4 to about 6 g/l.

In one embodiment, the concentration of starch in the solution comprising alkenyl succinic anhydride is in the range of about 0.4 to about 1.7 g/l.

In one embodiment, the concentration of starch in the solution comprising alkenyl succinic anhydride is in the range of about 1.6 to about 4.8 g/l.

The invention further relates to a cellulose-based food casing obtained by the method according to the invention.

### DETAILED DESCRIPTION

Reference will now be made in detail to the embodiments of the present invention.

A cellulose-based food casing according to the invention offers a better balance between adherence and release properties, meets one ore more of the above requirements and at the same time provides an economic solution in terms of sausage product productivity.

In this context, the term "alkenyl succinic anhydride" or "ASA" should be understood as meaning a compound composed of an unsaturated alkenic hydrocarbon backbone coupled to succinic anhydride. The number of carbon atoms in the alkenic hydrocarbon backbone may be in the range of 8 to 24. In some embodiments, the number of carbon atoms in the alkenic hydrocarbon backbone may be in the range of 14 to 20. Thus in this context, the term "C18-alkenyl succinic anhydride" should be understood as referring to alkenyl succinic anhydride comprising an alkenic hydrocarbon backbone having 18 carbon atoms.

Any form of alkenyl succinic anhydride selected from the group consisting of C8, C9, C10, C11, C12, C13, C14, C15, C16, C17, C18, C19, C20, C21, C22, C23, C24-alkenyl succinic anhydride, and any mixture thereof, may be used.

Alkenyl succinic anhydride as described above is available as pure compounds and mixtures as commercial products having a purity ranging from e.g. 90 % to 100 %.

The term "alkenyl succinic anhydride" or "ASA" may therefore also be understood as referring to two or more alkenyl succinic anhydride compounds and any mixtures thereof.

In this context, the term "cellulose-based food casing" should be understood as referring to a casing suitable for food.

The cellulose-based food casing is suitable for production of meat products such as sausages. The cellulose-based food casing described herein is in principle suitable for production of any type of sausage. It is highly suitable for the production of US style pepperoni sausages.

The cellulose-based food casing is tubular.

Cellulose-based food casings may have varying sizes and diameters, depending on e.g. the type of sausage product for which they are suitable, and/or other required characteristics.

The cellulose-based food casing comprises regenerated cellulose.

In this context, the term "regenerated cellulose" should be understood as referring to cellulose regenerated from viscose. In one embodiment, viscose is xanthate type viscose. However, while xanthate type viscose is commonly used, it is to be understood that viscose may also refer to cellulose having similar characteristics produced by any other technology for dissolving and extruding cellulose, including e.g. aminomethanate viscose (also known as carbamate or aminomethanate viscose and cupraammonium type viscose) as well as any solution based on non-derivatized cellulose, such as cellulose-tertiary amine oxide (NMMO) solutions and solutions based on ionic liquids.

The cellulose-based food casing comprises a fibrous reinforcement. This embodiment has the added utility that the fibrous reinforcement may provide mechanical strength or reinforcement to the cellulose-based food casing.

In this context, the term "fibrous reinforcement" should be understood as referring to fibrous material that is capable of mechanically reinforcing the cellulose-based food casing. In one embodiment, the fibrous reinforcement is a paper made from a strong cellulose fibre. Various types of cellulose fibre may be used, e.g. natural cellulose fibre such as hemp, but also a synthetic fibre, e.g. regenerated cellulose fibre in the form of rayon, may be used. In other embodiments, the fibrous reinforcement may be e.g. a woven sheet or web formed from a strong cellulose fibre.

In one embodiment, the fibrous reinforcement is tubular.

In one embodiment, the cellulose-based food casing comprises a fibrous reinforcement and an inside layer comprising regenerated cellulose.

In one embodiment, the cellulose-based food casing comprises a fibrous reinforcement and an outside layer comprising regenerated cellulose.

In one embodiment, the cellulose-based food casing comprises a fibrous reinforcement and an inside layer and an outside layer comprising regenerated cellulose.

These embodiments may be prepared e.g. by impregnating a fibrous reinforcement comprising an inside surface and an outside surface with regenerated cellulose, for instance viscose, by applying regenerated cellulose on the inside surface, on the outside surface, or the inside surface and the outside surface of the fibrous reinforcement. In other words, an inside layer and/or an outside layer of the cellulose-based food casing is formed by regenerated cellulose impregnated on the inside surface and/or the inside surface of the fibrous reinforcement.

Cellulose-based food casings comprising regenerated cellulose may be coagulated after application of regenerated cellulose e.g. in an acid bath. Cellulose-based food casings that have been coagulated may be further processed by washing steps.

In one embodiment, the cellulose-based food casing is a single layer viscose casing. In this context, the term "single layer viscose casing" or "SVC" should be understood as referring to a cellulose-based food casing comprising a fibrous reinforcement and an outside layer or an inside layer comprising regenerated cellulose. In other words, a single layer viscose casing comprises a fibrous reinforcement comprising an inside surface and an outside surface, wherein the inside surface or the outside surface is impregnated with viscose by applying viscose to either the inside surface or the outside surface of the fibrous reinforcement only. This embodiment has the added utility that it is relatively simple and cost-effective to manufacture.

In one embodiment, a single layer viscose casing comprises a fibrous reinforcement and an outside layer comprising regenerated cellulose. In other words, in one embodiment of a single layer viscose casing, a fibrous reinforcement comprising an inside surface and an outside surface is impregnated with viscose by applying viscose to the outside surface of the fibrous reinforcement only.

In one embodiment, the single layer viscose casing is tubular.

In one embodiment, the cellulose-based food casing is a single layer viscose casing comprising an inside surface and an outside layer comprising regenerated cellulose; and alkenyl succinic anhydride is impregnated in the inside surface.

In one embodiment, the cellulose-based food casing is a double layer viscose casing. In this context, the term "double layer viscose casing" or "DVC" should be understood as referring to a cellulose-based food casing comprising an inside layer, an outside layer and a fibrous reinforcement between the outside layer and inside layer, wherein the outside layer and inside layer comprise regenerated cellulose. In other words, a double layer viscose casing comprises a fibrous reinforcement impregnated with viscose by applying viscose to both sides of the fibrous reinforcement. This embodiment has the added utility that it is mechanically relatively strong and thus can withstand well processing steps that cause stretching of the cellulose-based food casing.

In one embodiment, the double layer viscose casing is tubular.

In one embodiment, the cellulose-based food casing is a double layer viscose casing comprising an inside layer, an outside layer and a fibrous reinforcement between the outside layer and inside layer, wherein the outside layer and inside layer comprise regenerated cellulose; and wherein alkenyl succinic anhydride is impregnated in the inside layer.

In one embodiment, the cellulose-based food casing is coated with alkenyl succinic anhydride. In other words, in this embodiment, alkenyl succinic anhydride is applied to the cellulose-based casing by coating the cellulose-based casing with a solution comprising alkenyl succinic anhydride. The coating may be performed e.g. by submerging or dipping the cellulose-based food casing into a solution comprising alkenyl succinic anhydride, or by internal bubble coating technology known in the art, or by any other technique that allows distribution of alkenyl succinic anhydride to the cellulose-based food casing or the inside surface or the outside surface thereof.

In one embodiment, the cellulose-based food casing comprises an inside surface and an outside surface; and the inside surface of the cellulose-based food casing is coated with a solution comprising alkenyl succinic anhydride.

In one embodiment, the cellulose-based food casing comprises an inside surface and an outside surface; and the outside surface of the cellulose-based food casing is coated with a solution comprising alkenyl succinic anhydride.

In one embodiment, the cellulose-based food casing comprises an inside surface and an outside surface; and the inside surface and the outside surface of the cellulose-based food casing is coated with a solution comprising alkenyl succinic anhydride.

Embodiments in which the inside surface or inside layer of the cellulose-based food casing is coated with a solution comprising alkenyl succinic anhydride, or in which the inside layer of the cellulose-based food casing is impregnated with a solution comprising alkenyl succinic anhydride, have the added utility that the presence of alkenyl succinic anhydride on the inside surface or inside layer may be sufficient to provide its effect; including alkenyl succinic anhydride in other parts of the cellulose-based food casing, e.g. the outside surface or outside layer, may not be necessary.

The alkenyl succinic anhydride may be present in the cellulose-based food casing in either bound or non-bound form. In this context, the term "bound" should be understood as meaning bound to cellulose by a covalent bond. In other words, bound alkenyl succinic anhydride has reacted chemically with the cellulose present in a cellulose-based food casing.

In one embodiment, the amount of alkenyl succinic anhydride in the cellulose-based food casing is up to about 1 % by weight based on the total dry weight of regenerated cellulose contained in the cellulose-based food casing. This amount includes alkenyl succinic anhydride both in bound and in non-bound form.

In one embodiment, the amount of alkenyl succinic anhydride in the cellulose-based food casing is up to about 0.75 %; or up to about 0.5%; or up to 0.25 %; or up to 0.1 %; or up to 0.06 % by weight based on the total dry weight of regenerated cellulose contained in the cellulose-based food casing.

In one embodiment, the amount of alkenyl succinic anhydride in the cellulose-based food casing is in the range of about 0.001 % to about 1 % by weight based on the total dry weight of regenerated cellulose contained in the cellulose-based food casing.

In one embodiment, the amount of alkenyl succinic anhydride in the cellulose-based food casing is in the range of about 0.001 % to about 0.75 % by weight based on the total dry weight of regenerated cellulose contained in the cellulose-based food casing; or in the range of about 0.001 % to about 0.5 %; or in the range of about 0.001 % to about 0.25 %; or in the range of about 0.001 % to about 0.1 %; or in the range of about 0.001 % to about 0.06 %.

The amount of alkenyl succinic anhydride in the cellulose-based food casing may depend e.g. on the parts of the cellulose-based food casing in which it is present. If the alkenyl succinic anhydride is present only in some parts of the cellulose-based food casing, e.g. as a coating on the inside surface or impregnated in the inside layer of the cellulose-based food casing, the amount of alkenyl succinic anhydride may be lower than if it is spread throughout the cellulose-based food casing.

The amount of alkenyl succinic anhydride in the cellulose-based food casing may be measured using known methods, e.g. by extracting bound and non-bound alkenyl succinic anhydride and measuring them using a combination of gas chromatography and mass spectrometric detection.

The amount of alkenyl succinic anhydride may be adjusted in different embodiments of the cellulose-based food casing so as to provide optimal release and other properties in the production of sausage products, depending on various parameters, such as the type of sausage product produced, other features of the cellulose-based food casing, for instance the amount of cellulose and/or regenerated cellulose present in the cellulose-based food casing, and the parameters of the the cooking, ripening and/or drying steps of the sausage product production.

Typically, a large amount of alkenyl succinic anhydride may provide a greater extent of pre-release or pre-release at an earlier time point during the ripening and/or drying of a sausage product, while a low amount of alkenyl succinic anhydride may provide a smaller extent of pre-release or pre-release at a later time point during the ripening and/or drying of a sausage product.

On the other hand, a large amount of alkenyl succinic anhydride may, in some embodiments, provide a very large extent of pre-release or full pre-release at an early time point during the ripening and/or drying of a sausage product. Such excessive pre-release may be inoptimal and e.g. may not allow automatic peeling. Furthermore, a large extent of pre-release or full pre-release at an early time point may reduce the rate of ripening and/or drying. In applications in which pre-release or full pre-release is not desired, the amount of alkenyl succinic anhydride in the cellulose-based food casing may be adjusted accordingly.

The amount of alkenyl succinic anhydride may, in some embodiments, also be selected so as to provide reduced greasing out but a small extent of pre-release.

Prior to impregnation or coating to a cellulose-based food casing, alkenyl succinic anhydride may be formulated in aqueous solution. The impregnation or coating may be performed as described below.

Prior to impregnation or coating of a cellulose-based food casing, alkenyl succinic anhydride may be formulated with a stabilizing agent. In this context, the term "a stabilizing agent" should be understood as referring to one or more stabilizing agents. A stabilizing agent may refer to any compound or composition that is capable of stabilizing and/or emulsifying alkenyl succinic anhydride in solution, e.g. aqueous solution. The stabilizing agent may also allow for particle formation suitable for impregnating or coating the cellulose-based food casing with alkenyl succinic anhydride. A stabilizing agent may be selected from, but is not limited to, starch, pectin, silica, one or more polyacrylamides, bentonite, one or more carboxymethyl celluloses, polyvinyl amine, polyvinyl alcohol, poly diallyl dimethyl ammonium chloride, galactoglucomannan, and polyamidoamine-epichlorohydrin. The presence of a stabilizing agent has the added utility that it stabilizes and/or emulsifies alkenyl succinic anhydride, which may otherwise be poorly soluble, and allows for efficient impregnation or coating of alkenyl succinic anhydride.

In one embodiment, the stabilizing agent is starch.

In this context, the term "starch" should be understood as referring to various types of starches suitable for emulsion stabilization and solutions thereof.

Starch may be considered to include, as nonlimiting examples only, starches obtained from plants such as potato, tapioca, corn, waxy maize, or wheat, or other natural sources of starch. Starches may also be of synthetic origin.

The composition of starch may differ depending on the source in terms of e.g. the proportions of straight (amylose) and branched (amylopectin) chains and chain length.

In one embodiment, starch is chemically or enzymatically modified. Various different chemical or enzymatic modifications are known to a skilled person.

In one embodiment, starch is chemically modified by etherification, esterification or crosslinking.

In one embodiment, starch is an amphoteric (i.e. anionic or cationic charge, based on pH) derivative.

In one embodiment, starch is cationic starch.

In one embodiment, starch is cationic starch produced by etherification of starch using an epoxy reagent containing a quaternary ammonium group.

In one embodiment, starch is depolymerized.

In one embodiment, starch is depolymerized by conversion, oxidation, hydrolysis or pyroconversion.

Various different starches are commercially available. Commercially available starches may further comprise small amounts of other components, e.g. components originating from the source of the starch such as a plant.

Embodiments in which alkenyl succinic anhydride is formulated with starch have the added utility that starch stabilizes and/or emulsifies alkenyl succinic anhydride in solution. Starch is also inexpensive and readily available.

The exact ratio of alkenyl succinic anhydride to a stabilizing agent is not critical, provided that it allows for particle formation with a particle size suitable for impregnation or coating of alkenyl succinic anhydride in the cellulose-based food casing. For example, if starch is used as a stabilizing agent, the ratio of alkenyl succinic anhydride to starch may be, but is not limited to, 1:2; or in the range of 1:1 to 20:1; or in the range of 1:1 to 2:1; or in the range of 1:1 to 4:1; or in the range of 0.5:1 to 40:1.

In various embodiments, the cellulose-based food casing may further comprise a peeling agent. In this context, the term "peeling agent" should be understood as referring to a chemical agent that is capable of controlling and/or reducing peeling forces required for removing a cellulose-based food casing from a sausage product. In this context, the term "a peeling agent" should also be understood as referring to one or more peeling agents. A peeling agent may be selected from, but is not limited to, paraffin, paraffin wax, alkylketene dimer and polyalkylene glycol. A peeling agent agent may be comprised in the outside layer, inside layer, outside surface and/or inside surface of a cellulose-based food casing. These embodiments have the added utility that a peeling agent agent may further optimize or alter peeling characteristics of a cellulose-based food casing.

The invention also relates to a method for producing the cellulose-based food casing according to the invention, which method comprises the step of impregnating or coating a cellulose-based food casing with a solution comprising alkenyl succinic anhydride.

In one embodiment, the cellulose-based food casing is impregnated with a solution comprising alkenyl succinic anhydride admixed with regenerated cellulose.

In this embodiment, alkenyl succinic anhydride is injected into the solution comprising regenerated cellulose before the solution is impregnated into the fibrous reinforcement and before the cellulose-based food casing is regenerated or coagulated. This embodiment has the added utility that alkenyl succinic anhydride may be very evenly distributed in the cellulose-based food casing. Furthermore, a constant level of alkenyl succinic anhydride is applied to the cellulose-based food casing.

In one embodiment, the method comprises the steps of
a) admixing alkenyl succinic anhydride with regenerated cellulose to form a solution;
b) preparing a cellulose-based food casing by impregnating the inside surface and/or outside surface of a fibrous reinforcement with the solution obtainable from step a); and
c) coagulating and washing the cellulose-based food casing obtainable from step b).

In one embodiment, the amount of of alkenyl succinic anhydride in the solution comprising alkenyl succinic anhydride admixed with regenerated cellulose is up to about 1 % by weight based on the total dry weight of regenerated cellulose.

In one embodiment, the amount of of alkenyl succinic anhydride in the solution comprising alkenyl succinic anhydride admixed with regenerated cellulose is up to about 0.75 %; or up to about 0.5%; or up to 0.25 %; or up to 0.1 %; or up to 0.06 % by weight based on the total dry weight of regenerated cellulose.

In one embodiment, the amount of of alkenyl succinic anhydride in the solution comprising alkenyl succinic anhydride admixed with regenerated cellulose is in the range of about 0.001 % to about 1 % by weight based on the total dry weight of regenerated cellulose.

In one embodiment, the amount of of alkenyl succinic anhydride in the solution comprising alkenyl succinic anhydride admixed with regenerated cellulose is in the range of about 0.001 % to about 0.75 % by weight based on the total dry weight of regenerated cellulose; or in the range of about 0.001 % to about 0.5 %; or in the range of about 0.001 % to about 0.25 %; or in the range of about 0.001 % to about 0.1 %; or in the range of about 0.001 % to about 0.06 %.

In one embodiment, a cellulose-based food casing is coated with a solution comprising alkenyl succinic anhydride.

The method comprises the steps of
a) preparing a cellulose-based food casing by impregnating the inside surface and/or outside surface of a fibrous reinforcement with regenerated cellulose;
b) coagulating and washing the cellulose-based food casing obtainable from step a); and
c) coating the inside surface of the cellulose-based food casing obtainable from step b) with a solution comprising alkenyl succinic anhydride.

In one embodiment, the method further comprises the step of d) curing the cellulose-based food casing.

In one embodiment, the method further comprises the step of d) curing and drying the cellulose-based food casing.

The present inventors have found that curing the cellulose-based food casing comprising alkenyl succinic anhydride is in many embodiments not necessary, thus allowing fast and economic manufacture of the cellulose-based food casing.

In one embodiment, the method further comprises the step of d) drying the cellulose-based food casing.

In one embodiment, the method does not comprise a step d) of curing the cellulose-based food casing.

Coating the inside surface of the cellulose-based food casing with the solution comprising alkenyl succinic anhydride may be done by e.g. internal bubble coating, the technique of which is known in the art, or e.g. by dipping the cellulose-based food casing in the solution comprising alkenyl succinic anhydride.

In one embodiment, the concentration of alkenyl succinic anhydride in the solution comprising alkenyl succinic anhydride is in the range of 1 to 15 g/l.

In one embodiment, the concentration of alkenyl succinic anhydride in the solution comprising alkenyl succinic anhydride is in the range of about 1 to about 15 g/l.

In one embodiment, the concentration of alkenyl succinic anhydride in the solution comprising alkenyl succinic anhydride is in the range of 1 to 4 g/l.

In one embodiment, the concentration of alkenyl succinic anhydride in the solution comprising alkenyl succinic anhydride is in the range of about 1 to about 4 g/l.

In one embodiment, the concentration of alkenyl succinic anhydride in the solution comprising alkenyl succinic anhydride is in the range of 4 to 12 g/l.

In one embodiment, the concentration of alkenyl succinic anhydride in the solution comprising alkenyl succinic anhydride is in the range of about 4 to about 12 g/l.

In one embodiment, the solution comprising alkenyl succinic anhydride further comprises a stabilizing agent as defined above.

In one embodiment, the stabilizing agent is starch.

In one embodiment, the concentration of starch in the solution comprising alkenyl succinic anhydride is in the range of 0.4 to 6 g/l.

In one embodiment, the concentration of starch in the solution comprising alkenyl succinic anhydride is in the range of about 0.4 to about 6 g/l.

In one embodiment, the concentration of starch in the solution comprising alkenyl succinic anhydride is in the range of 0.4 to 1.7 g/l.

In one embodiment, the concentration of starch in the solution comprising alkenyl succinic anhydride is in the range of about 0.4 to about 1.7 g/l.

In one embodiment, the concentration of starch in the solution comprising alkenyl succinic anhydride is in the range of 1.6 to 4.8 g/l.

In one embodiment, the concentration of starch in the solution comprising alkenyl succinic anhydride is in the range of about 1.6 to about 4.8 g/l.

In this context, the concentrations of starch in the solution indicate the amount of dry starch per litre of solution, i.e. as dry weight in grams or % per litre.

The invention further relates to the use of alkenyl succinic anhydride for controlling release properties of a cellulose-based food casing.

The invention further relates to the use of alkenyl succinic anhydride for controlling and/or inducing pre-release of a cellulose-based food casing.

The invention further relates to the use of alkenyl succinic anhydride for controlling and/or reducing peeling forces required for removing a cellulose-based food casing from a sausage product.

The present inventors have surprisingly found that the presence of alkenyl succinic anhydride in a cellulose-based food casing can favourably influence adherence and release characteristics of the cellulose-based food casing.

The presence and the amount of alkenyl succinic anhydride in the cellulose-based food casing influences the extent of pre-release during ripening and/or drying of a sausage product. Further, the presence and the amount of alkenyl succinic anhydride in the cellulose-based food casing influences the timing of pre-release during ripening and/or drying of a sausage product.

The presence of alkenyl succinic anhydride in a cellulose-based food casing may significantly reduce peeling forces required to remove the cellulose-based food casing from a sausage product.

Because of the large extent and/or optimal timing of pre-release, reduced peeling forces are required to remove the cellulose-based food casing according to the present invention from a sausage product. Thus the cellulose-based food casing according to the present invention allows for fast peeling using e.g. automatic peeling equipment. Thus the cellulose-based food casing according to the present invention may be particularly suitable for large-scale production of sausage products in which automatic peeling is necessary.

Furthermore, the presence of alkenyl succinic anhydride in a cellulose-based food casing may significantly reduce greasing out during ripening and/or drying of a sausage product. Reduced greasing out may also significantly improve the efficiency of the ripening and/or drying process of a sausage product.

The present inventors have also found that a cellulose-based food casing comprising alkenyl succinic anhydride may perform very consistently. Alkenyl succinic anhydride does not appear to be particularly sensitive to minor fluctuations in conditions such as pH during the manufacture of the cellulose-based food casing, thus leading to a cellulose-based food casing that may be uniform e.g. within and between batches.

Furthermore, in many cases, a separate, possible time-consuming, curing step is not required for cellulose-based food casings comprising alkenyl succinic anhydride.

The embodiments of the invention described hereinbefore may be used in any combination with each other. Several of the embodiments may be combined together to form a further embodiment of the invention. A product, a method or a use, to which the invention is related, may comprise at least one of the embodiments of the invention described hereinbefore.

### EXAMPLES

In the following, the present invention will be described in more detail. The description below discloses some embodiments and examples of the invention in such detail that a person skilled in the art is able to utilize the invention based on the disclosure. Not all steps of the embodiments are discussed in detail, as many of the steps will be obvious for the person skilled in the art based on this specification. The following examples were carried out in a small-scale testing laboratory; however, a person skilled in the art is able to scale the examples as desired.

### EXAMPLE 1.

ASA was formulated in solution for coating cellulose-based food casings. (2-alkenyl(C15-C21))succinic anhydride (99% active material, Prequel™ 2000E, Ashland Inc., USA) was emulsified with cationic starch solution (solution at 20%, VECTOR® SCA, Roquette Freres S.A., France) in solutions, wherein the ratio of ASA to the starch solution ranged from 10/20 to 150/300 (w/w in grams) (Table 1). As a skilled person will understand, the concentration of ASA in aqueous solutions having compositions indicated in Table 1 ranges from about 1 g/l to about 15 g/l, and the concentration of starch ranges from about 0.4 g/l to about 6 g/l (dry weight % per litre).

**Table 1. Composition of ASA/starch solutions**

| **ASA/ starch ratio** | | **Amount** | | | | | |
|---|---|---|---|---|---|---|---|
| | | **Stare h** | **ASA** | **Glycerine** | **Water Added** | **Water et al** | **Total** |
| | x ASA | % | % | % | % | % | % |
| 10/20 | 0,25 | 0.042 | 0.105 | 4.009 | 95.672 | 0.171 | 100 |
| 20/40 | 0,50 | 0.084 | 0.209 | 3.988 | 95.379 | 0.340 | 100 |
| 30/60 | 0,75 | 0.126 | 0.312 | 3.967 | 95.088 | 0.507 | 100 |
| 40/80 | 1,00 | 0.167 | 0.413 | 3.947 | 94.801 | 0.672 | 100 |
| 50/100 | 1,25 | 0.208 | 0.514 | 3.926 | 94.516 | 0.836 | 100 |
| 60/120 | 1,50 | 0.248 | 0.614 | 3.906 | 94.234 | 0.998 | 100 |
| 70/140 | 1,75 | 0.288 | 0.712 | 3.886 | 93.956 | 1.159 | 100 |
| 80/160 | 2,00 | 0.327 | 0.810 | 3.866 | 93.680 | 1.317 | 100 |
| 90/180 | 2,25 | 0.366 | 0.907 | 3.846 | 93.407 | 1.474 | 100 |
| 100/200 | 2,50 | 0.405 | 1.002 | 3.827 | 93.136 | 1.630 | 100 |
| 110/220 | 2,75 | 0.443 | 1.097 | 3.807 | 92.869 | 1.784 | 100 |
| 120/240 | 3,00 | 0.481 | 1.191 | 3.788 | 92.604 | 1.936 | 100 |
| 130/260 | 3,25 | 0.519 | 1.283 | 3.769 | 92.341 | 2.087 | 100 |
| 140/280 | 3,50 | 0.556 | 1.375 | 3.751 | 92.082 | 2.237 | 100 |
| 150/300 | 3,75 | 0.592 | 1.466 | 3.732 | 91.825 | 2.384 | 100 |

SVC and DVC casings were coated with solutions described in Table 1 by internal bubble coating and dried.

### EXAMPLE 2.

Double layer viscose (DVC) casings were coated with ASA/starch solutions having ASA/starch ratios of 10/20, 40/80 and 20/40 as described in Example 1. A traditional DVC casing without ASA was employed as a reference casing. Such traditional DSV casings have typically not been accepted for pork/beef high temperature pepperoni because of grease and oil spots. DVC casing (ViskoTeepak size 1 DVC casing) was manufactured using a double layer viscose technique in which the casing was prepared by coating a fibrous layer on each side with viscose. The casing was subsequently treated by coagulation, regeneration, washing and drying steps using known methods.

Pork/beef pepperoni sausages were manufactured in a conventional manner with high temperature heating after fermentation at fully cooking temperature using both high humidity (HH) and low humidity (LH) processes.

The drying of the pepperoni sausages was measured in terms of yield % calculated as the percentage of the weight of the dried pepperoni sausage to the weight of the pepperoni sausage before drying; high yield % indicates poor/slow drying.

Casing separation was measured on a scale from 0 (no pre-release of casing) to 10 (full pre-release of casing).

Greasing out was measured on a scale from 0 (no greasing out) to 10 (high greasing out).

The results are shown in Table 2.

**Table 2.**

| **Sample** | **Yield %** | | **Casing separation** | **Greasing out** | **Casing separation** | **Greasing out** |
|---|---|---|---|---|---|---|
| | **HH** | **LH** | **HH** | **HH** | **LH** | **LH** |
| DVC, ASA/starch ratio 10/20 | 77.8 | 73.3 | 0.5 | 0.25 | 0.5 | 0 |
| DVC, ASA/starch ratio 40/80 | 74.1 | 73.5 | 0.1 | 0.1 | 0 | 0 |
| DVC, ASA/starch ratio 20/40 | 72.7 | 73.6 | 0.05 | 0 | 0 | 0 |
| DVC | 80.1 | 73.6 | 0.5 | 7 | 0.25 | 0 |

It was concluded that greasing out was very high in conventional DVC casings; greasing out has a direct impact on the yield %, i.e. the higher the greasing out, the slower the drying. Results obtained using traditional DVC casing in a high humidity process led to clearly unacceptable results, i.e. high greasing out and high yield % indicating slow drying. All DVC casings with ASA formulations were capable of reducing greasing out in DVC casings, since greasing out was very low in casings comprising ASA.

### EXAMPLE 3.

High temperature pork/beef pepperoni sausages were manufactured in a conventional manner using four different cellulose-based food casings in order to determine a casing with optimal pre-release and minimal greasing out for applications in which pre-release towards the end of the manufacturing process is desirable.

Reference casing refers to a simple SVC casing which was not impregnated or coated with any additives.

Reference casing with AKD refers to a SVC casing coated with alkylketene dimer (AKD) and polyamine-polyamide-epichlorohydrin resin by internal bubble coating.

Reference casing with PEG refers to a DVC casing manufactured by injecting polyethylene glycol (PEG, molecular weight of about 35000 g/mol) at a concentration of 5% by weight, based on dry regenerated viscose cellulose of the casing, in the viscose to obtain an outside viscose stream; and polyamine-polyamide-epichlorohydrin at a concentration of 0.1% by weight, based on dry regenerated viscose cellulose of the casing, to obtain an inside viscose stream; by impregnating a tubular fibrous web with viscose by applying to the inside of the tubular fibrous web the inside viscous stream and to the outside of the tubular fibrous web the outside viscose stream. The reference casing with PEG was further subjected to coagulation, regeneration, washing and drying steps. The manufacture of this casing is described in more detail in the publication US 2012/0052223.

Casing with ASA/starch ratio 40/80 refers to a SVC casing coated with ASA/starch solution having an ASA/starch ratio of 40/80 as described in Example 1.

Pre-release was measured on a scale in which a value close to 10 indicates significant pre-release at the end of the manufacturing process.

Greasing out was measured on a scale from 0 (no greasing out) to 10 (high greasing out).

The results are shown in Table 3.

**Table 3.**

| **Sample** | **Pre-release (0-10)** | **Greasing out (0-10)** | **General evaluation** |
|---|---|---|---|
| Ref. casing with AKD | 0 | 0 | Not suitable |
| Ref. casing | 7 | 3 | Performance inconsistent, some greasing out |
| Ref. casing with PEG | 7 | 1 | Performance inconsistent, some greasing out |
| Casing with ASA/starch ratio 40/80 | 9 | 0.25 | Performance consistent, little greasing out |

The results indicated that the reference casing with AKD showed no pre-release and thus was deemed unsuitable for applications that require pre-release. The reference casing and the reference casing with PEG both showed some pre-release but also some greasing out.

The reference casings also exhibited inconsistent behaviour, i.e. different portions or batches of casing could exhibit varying behaviour in terms of pre-release and greasing out. Such inconsistent behaviour may cause significant problems in a highly controlled and optimized sausage manufacturing process.

In contrast, the casing comprising ASA showed optimal pre-release and very little greasing out in a consistent manner.

### EXAMPLE 4.

High temperature pork/beef pepperoni sausages were stuffed to the same diameter and manufactured in a conventional manner using the four different cellulose-based food casings described in Example 3 in order to determine peel forces required to remove the casings from the surface of the sausages.

Reference casing with PEG in this Example refers to a SVC casing manufactured by injecting polyethylene glycol (PEG, molecular weight of about 35000 g/mol) at a concentration of 5% by weight, based on dry regenerated viscose cellulose of the casing, in the viscose to obtain an outside viscose stream; by impregnating a tubular fibrous web with viscose by applying to the outside of the tubular fibrous web the outside viscose stream. The reference casing with PEG was further subjected to coagulation, regeneration, washing and drying steps. The manufacture of this casing is described in more detail in the publication US 2012/0052223.

For measuring peel forces, a strip having a width of 2 cm was cut in the casing in the longitudinal direction of the sausage. A dynamometer was connected to first end of said strip, and the dynamometer connected to the first end of the strip was pulled towards the second end of said strip in the longitudinal direction of the sausage. Maximum and average peel forces were measured. The results are shown in Table 4.

**Table 4.**

| **Sample** | **Evaluation after cooking** | **Yield % after 9 days** | **Peel force seam max (N/2 cm)** | **Peel force average (N/2 cm)** | **Peel force opposite max (N/2 cm)** | **Peel force opposite average (N/2 cm)** |
|---|---|---|---|---|---|---|
| Ref. casing with AKD | No grease out | 71.8 | 0.55 | 0.3 | 0.6 | 0.4 |
| Casing with ASA/starch ratio 40/80 | No grease out | 71.9 | 0 | 0 | 0 | 0 |
| Ref. casing with PEG | Grease out | 73.5 | 1.5 | 0.5 | 1.1 | 0.5 |
| Ref. casing | Grease out | 72.7 | 1.95 | 0.6 | 1.1 | 0.4 |

Reference casing (without additives) and reference casing with PEG displayed some grease out, while casing comprising ASA and casing comprising AKD did not. The fact that reference casing without additives also displayed significant greasing out indicates that the conditions of the experiment was performed in conditions that favoured greasing out; this further demonstrates that casings comprising ASA display greatly reduced greasing out even in conditions in which conventional casings perform poorly.

Furthermore, in contrast to the other casings, the casing comprising ASA required virtually nonexistent peel forces due to optimal pre-release, and would thus be highly suitable for automated peelers. The other casings would be impossible or at least very difficult to peel automatically due to e.g. significant greasing out.

It is obvious to a person skilled in the art that with the advancement of technology, the basic idea of the invention may be implemented in various ways. The invention and its embodiments are thus not limited to the examples described above; instead they may vary within the scope of the claims.

## Claims

1. A cellulose-based food casing for production of meat products, wherein the cellulose-based food casing is tubular and comprises a fibrous reinforcement and an inside layer and/or an outside layer comprising regenerated cellulose; wherein the cellulose-based food casing comprises an inside surface and an outside surface;
**characterized in that** the inside surface of the cellulose-based food casing is coated with alkenyl succinic anhydride, or alkenyl succinic anhydride is impregnated in the inside layer of the cellulose-based food casing.

2. A cellulose-based food casing according to claim 1, wherein the fibrous reinforcement comprises an inside surface and an outside surface; and an outside layer is on the outside surface of the fibrous reinforcement and/or an inside layer is on the outside surface of the fibrous reinforcement; and wherein the outside layer and/or the inside layer comprises regenerated cellulose.

3. A cellulose-based food casing according to claim 1 or 2, wherein the outside surface of the cellulose-based food casing is coated with alkenyl succinic anhydride.

4. A cellulose-based food casing according to claim 2, wherein alkenyl succinic anhydride is impregnated in the inside layer of the cellulose-based food casing.

5. A cellulose-based food casing according to any one of claims 1 - 4, wherein the cellulose-based food casing is a single layer viscose casing comprising an inside surface and an outside layer comprising regenerated cellulose; and the alkenyl succinic anhydride is impregnated in the inside surface.

6. A cellulose-based food casing according to claims 1 - 4, wherein the cellulose-based food casing is a double layer viscose casing comprising an inside layer, an outside layer and a fibrous reinforcement between the outside layer and inside layer, wherein the outside layer and inside layer comprise regenerated cellulose; and wherein alkenyl succinic anhydride is impregnated in the inside layer.

7. A cellulose-based food casing according to any one of claims 1 - 6, wherein the amount of alkenyl succinic anhydride in the cellulose-based food casing is up to about 1 % by weight based on the total dry weight of regenerated cellulose contained in the cellulose-based food casing.

8. A method for the manufacture of a cellulose-based food casing according to any one of claims 1 - 7, the method comprising alkenyl succinic anhydride for production of meat products, wherein the cellulose-based food casing is tubular, which method comprises the steps of
a) preparing a cellulose-based food casing by impregnating the inside surface and/or outside surface of a fibrous reinforcement with regenerated cellulose;
b) coagulating and washing the cellulose-based food casing obtainable from step a); and
c) coating the inside surface of the cellulose-based food casing obtainable from step b) with a solution comprising alkenyl succinic anhydride.

9. The method according to claim 8, wherein the concentration of alkenyl succinic anhydride in the solution comprising alkenyl succinic anhydride is in the range of about 1 to about 15 g/l; or in the range of about 1 to about 4 g/l; or in the range of about 4 to about 12 g/l.

10. The method according to any one of claims 8 - 9, wherein the solution comprising alkenyl succinic anhydride further comprises a stabilizing agent such as starch, pectin, silica, one or more polyacrylamides, bentonite, one or more carboxymethyl celluloses, polyvinyl amine, polyvinyl alcohol, poly diallyl dimethyl ammonium chloride, galactoglucomannan, or polyamidoamine-epichlorohydrin.

11. The method according to claim 10, wherein the stabilizing agent is starch, and the concentration of starch in the solution comprising alkenyl succinic anhydride is in the range of about 0.4 to about 6 g/l; or in the range of about 0.4 to about 1.7 g/l; or in the range of about 1.6 to about 4.8 g/l.

12. The method according to any one of claims 8 - 11, wherein step c) comprises coating the inside surface of the cellulose-based food casing with the solution comprising alkenyl succinic anhydride by internal bubble coating.

13. A cellulose-based food casing obtained by the method according to any one of claims 8 - 12.

## Patentansprüche

1. Nahrungsmittelhülle auf Zellulosebasis für die Herstellung von Fleischprodukten, wobei die Nahrungsmittelhülle auf Zellulosebasis röhrenförmig ist und eine Faserverstärkung und eine innere Schicht und/oder eine äußere Schicht mit regenerierter Zellulose umfasst; wobei die Nahrungsmittelhülle auf Zellulosebasis eine innere Oberfläche und eine äußere Oberfläche umfasst;
**dadurch gekennzeichnet, dass** die innere Oberfläche der Nahrungsmittelhülle auf Zellulosebasis mit Alkenylbernsteinsäureanhydrid beschichtet ist oder die innere Schicht der Nahrungsmittelhülle auf Zellulosebasis mit Alkenylbernsteinsäureanhydrid imprägniert ist.

2. Nahrungsmittelhülle auf Zellulosebasis nach Anspruch 1, wobei die Faserverstärkung eine innere Oberfläche und eine äußere Oberfläche umfasst; und eine äußere Schicht sich auf der äußeren Oberfläche der Faserverstärkung befindet und/oder eine innere Schicht sich auf der äußeren Oberfläche der Faserverstärkung befindet; und wobei die äußere Schicht und/oder die innere Schicht regenerierte Zellulose umfassen.

3. Nahrungsmittelhülle auf Zellulosebasis nach Anspruch 1 oder 2, wobei die äußere Oberfläche der Nahrungsmittelhülle auf Zellulosebasis mit Alkenylbernsteinsäureanhydrid beschichtet ist.

4. Nahrungsmittelhülle auf Zellulosebasis nach Anspruch 2, wobei die innere Schicht der Nahrungsmittelhülle auf Zellulosebasis mit Alkenylbernsteinsäureanhydrid imprägniert ist.

5. Nahrungsmittelhülle auf Zellulosebasis nach einem der Ansprüche 1 - 4, wobei die Nahrungsmittelhülle auf Zellulosebasis eine einschichtige Viskosehülle mit einer inneren Oberfläche und einer äußeren Schicht mit regenerierter Zellulose ist; und die innere Oberfläche mit Alkenylbernsteinsäureanhydrid imprägniert ist.

6. Nahrungsmittelhülle auf Zellulosebasis nach den Ansprüchen 1 - 4, wobei die Nahrungsmittelhülle auf Zellulosebasis eine doppelschichtige Viskosehülle mit einer inneren Schicht, einer äußeren Schicht und einer Faserverstärkung zwischen der äußeren Schicht und der inneren Schicht ist, wobei die äußere Schicht und die innere Schicht regenerierte Zellulose umfassen; und wobei die innere Schicht mit Alkenylbernsteinsäureanhydrid imprägniert ist.

7. Nahrungsmittelhülle auf Zellulosebasis nach einem der Ansprüche 1 - 6, wobei die Menge an Alkenylbernsteinsäureanhydrid in der Nahrungsmittelhülle auf Zellulosebasis bis zu etwa 1 Gewichts-% auf der Basis des gesamten Trockengewichts von regenerierter Zellulose, die in der Nahrungsmittelhülle auf Zellulosebasis enthalten ist, ist.

8. Verfahren für die Herstellung einer Nahrungsmittelhülle auf Zellulosebasis nach einem der Ansprüche 1 - 7, wobei das Verfahren Alkenylbernsteinsäureanhydrid für die Herstellung von Fleischprodukten umfasst, wobei die Nahrungsmittelhülle auf Zellulosebasis röhrenförmig ist, wobei das Verfahren die Schritte umfasst
a) Vorbereiten einer Nahrungsmittelhülle auf Zellulosebasis durch Imprägnieren der inneren Oberfläche und/oder der äußeren Oberfläche einer Faserverstärkung mit regenerierter Zellulose;
b) Koagulieren und Waschen der Nahrungsmittelhülle auf Zellulosebasis, die aus Schritt a) erhältlich ist; und
c) Beschichten der inneren Oberfläche der Nahrungsmittelhülle auf Zellulosebasis, die aus Schritt b) erhältlich ist, mit einer Lösung, die Alkenylbernsteinsäureanhydrid umfasst.

9. Verfahren nach Anspruch 8, wobei die Konzentration von Alkenylbernsteinsäureanhydrid in der Lösung, die Alkenylbernsteinsäureanhydrid umfasst, im Bereich von etwa 1 bis etwa 15 g/l; oder im Bereich von etwa 1 bis etwa 4 g/l; oder im Bereich von etwa 4 bis etwa 12 g/l liegt.

10. Verfahren nach einem der Ansprüche 8 - 9, wobei die Lösung, die Alkenylbernsteinsäureanhydrid umfasst, ferner ein Stabilisierungsmittel wie z. B. Stärke, Pektin, Siliziumdioxid, ein oder mehrere Polyacrylamide, Bentonit, eine oder mehrere Carboxymethylcellulosen, Polyvinylamin, Polyvinylalkohol, Polydiallyldimethylammoniumchlorid, Galactoglucomannan oder Polyamidoamin-epichlorhydrin umfasst.

11. Verfahren nach Anspruch 10, wobei das Stabilisierungsmittel Stärke ist und die Konzentration von Stärke in der Lösung, die Alkenylbernsteinsäureanhydrid umfasst, im Bereich von etwa 0,4 bis etwa 6 g/l; oder im Bereich von etwa 0,4 bis etwa 1,7 g/l; oder im Bereich von etwa 1,6 bis etwa 4,8 g/l liegt.

12. Verfahren nach einem der Ansprüche 8 - 11, wobei Schritt c) das Beschichten der inneren Oberfläche der Nahrungsmittelhülle auf Zellulosebasis mit der Lösung, die Alkenylbernsteinsäureanhydrid umfasst, durch internes Schaumstreichen umfasst.

13. Nahrungsmittelhülle auf Zellulosebasis, die durch das Verfahren nach einem der Ansprüche 8 - 12 erhalten wird.

## Revendications

1. Enveloppe alimentaire à base de cellulose pour la production de produits carnés, dans laquelle l'enveloppe alimentaire à base de cellulose est tubulaire et comprend un renfort fibreux et une couche intérieure et/ou une couche extérieure comprenant une cellulose régénérée ; dans laquelle l'enveloppe alimentaire à base de cellulose comprend une surface intérieure et une surface extérieure ;
**caractérisée en ce que** la surface intérieure de l'enveloppe alimentaire à base de cellulose est revêtue d'un anhydride alcénylsuccinique, ou un anhydride alcénylsuccinique est imprégné dans la couche intérieure de l'enveloppe alimentaire à base de cellulose.

2. Enveloppe alimentaire à base de cellulose selon la revendication 1, dans laquelle le renfort fibreux comprend une surface intérieure et une surface extérieure ; et une couche extérieure est sur la surface extérieure du renfort fibreux et/ou une couche intérieure est sur la surface extérieure du renfort fibreux ; et dans laquelle la couche extérieure et/ou la couche intérieure comprend une cellulose régénérée.

3. Enveloppe alimentaire à base de cellulose selon la revendication 1 ou 2, dans laquelle la surface extérieure de l'enveloppe alimentaire à base de cellulose est revêtue d'un anhydride alcénylsuccinique.

4. Enveloppe alimentaire à base de cellulose selon la revendication 2, dans laquelle l'anhydride alcénylsuccinique est imprégné dans la couche intérieure de l'enveloppe alimentaire à base de cellulose.

5. Enveloppe alimentaire à base de cellulose selon l'une des revendications 1 à 4, dans laquelle l'enveloppe alimentaire à base de cellulose est une enveloppe de viscose monocouche comprenant une surface intérieure et une couche extérieure comprenant une cellulose régénérée ; et l'anhydride alcénylsuccinique est imprégné dans la surface intérieure.

6. Enveloppe alimentaire à base de cellulose selon l'une des revendications 1 à 4, dans laquelle l'enveloppe alimentaire à base de cellulose est une enveloppe de viscose double couche comprenant une couche intérieure, une couche extérieure et un renfort fibreux entre la couche extérieure et la couche intérieure, dans laquelle la couche extérieure et la couche intérieure comprennent une cellulose régénérée ; et dans laquelle un anhydride alcénylsuccinique est imprégné dans la couche intérieure.

7. Enveloppe alimentaire à base de cellulose selon l'une des revendications 1 à 6, dans laquelle la quantité d'anhydride alcénylsuccinique dans l'enveloppe alimentaire à base de cellulose va jusqu'à environ 1 % en poids sur la base du poids sec total de cellulose régénérée contenue dans l'enveloppe alimentaire à base de cellulose.

8. Procédé pour la fabrication d'une enveloppe alimentaire à base de cellulose selon l'une des revendications 1 à 7, le procédé comprenant un anhydride alcénylsuccinique pour la production de produits carnés, dans lequel l'enveloppe alimentaire à base de cellulose est tubulaire, lequel procédé comprend les étapes suivantes
a) la préparation d'une enveloppe alimentaire à base de cellulose en imprégnant la surface intérieure et/ou la surface extérieure d'un renfort fibreux avec une cellulose régénérée ;
b) la coagulation et le lavage de l'enveloppe alimentaire à base de cellulose pouvant être obtenue à partir de l'étape a) ; et
c) le revêtement de la surface intérieure de l'enveloppe alimentaire à base de cellulose pouvant être obtenue à partir de l'étape b) avec une solution comprenant un anhydride alcénylsuccinique.

9. Procédé selon la revendication 8, dans lequel la concentration en anhydride alcénylsuccinique dans la solution comprenant un anhydride alcénylsuccinique est dans la plage d'environ 1 à environ 15 g/l ; ou dans la plage d'environ 1 à environ 4 g/l ; ou dans la plage d'environ 4 à environ 12 g/l.

10. Procédé selon l'une des revendications 8 et 9, dans lequel la solution comprenant un anhydride alcénylsuccinique comprend en outre un agent stabilisant tel qu'un amidon, une pectine, une silice, un ou plusieurs polyacrylamides, une bentonite, une ou plusieurs carboxyméthylcelluloses, une polyvinylamine, un polyalcool vinylique, un polychlorure de diallyldiméthylammonium, un galactoglucomannane, ou une polyamidoamine-épichlorhydrine.

11. Procédé selon la revendication 10, dans lequel l'agent stabilisant est un amidon, et la concentration en amidon dans la solution comprenant un anhydride alcénylsuccinique est dans la plage d'environ 0,4 à environ 6 g/l ; ou dans la plage d'environ 0,4 à environ 1,7 g/l ; ou dans la plage d'environ 1,6 à environ 4,8 g/l.

12. Procédé selon l'une des revendications 8 à 11, dans lequel l'étape c) comprend le revêtement de la surface intérieure de l'enveloppe alimentaire à base de cellulose avec la solution comprenant un anhydride alcénylsuccinique par revêtement à bulles internes.

13. Enveloppe alimentaire à base de cellulose obtenue par le procédé selon l'une des revendications 8 à 12.
